(19) Europäisches Patentamt

European Patent Office

Office européen des brevets

(11) **EP 1 734 377 A1**

(12) **EUROPEAN PATENT APPLICATION**

(43) Date of publication:
20.12.2006 Bulletin 2006/51

(51) Int Cl.:
*G01S 1/00* (2006.01)  *H04B 1/707* (2006.01)

(21) Application number: 06447031.3

(22) Date of filing: 06.03.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 13.06.2005 EP 05447136

(71) Applicant: Septentrio N.V.
3001 Leuven (BE)

(72) Inventor: Sleewaeghen, Jean-Marie
1090 Jette (BE)

(74) Representative: Van Gysel, Stefan et al
pronovem-Office Van Malderen
Avenue Josse Goffin 158
1082 Bruxelles (BE)

(54) **Method for designing a receiver for ranging applications**

(57)     The present invention is related to a method for designing a receiver, said receiver comprising a delay line, comprising M+N+1 taps, M+N+1 being at least four, M+N+1 mixers and accumulators to calculate M+N+1 correlation values, a multipath estimator module to calculate a multipath error estimate (MP), according to a linear combination of normalized correlation values, said method comprising the steps of :

- simulating, for a fixed signal-to-multipath amplitude ratio and for different multipath delays : the multipath range error and M+N+1 correlation values,
- using said simulated range errors and correlation values to obtain a system of equations, each equation equating the simulated multipath range error to a linear combination of the M+N+1 correlation values,
- obtaining said $\alpha_i$ values by solving said system of equations.

FIG. 1

EP 1 734 377 A1

**Description**

**Field of the invention**

The present invention is related to a method for designing a receiver for receiving and processing signals, essentially signals of the spread spectrum type, such as are used in the Global Positioning System (GPS).

**State of the art**

Today, satellite based positioning systems are widely in use. Most known are the Global Positioning System (GPS) developed by the United States Government or the Global Navigation Satellite System (GLONASS) developed by the Russian Government. The primary purpose of these systems is to provide position, velocity and time to any user on or near the Earth's surface. The user determines his position in space and time by measuring his range to at least 4 satellites whose position and time are accurately determined, the range being defined as the distance between the user and a satellite.

The GPS satellites transmit signals on two carrier frequencies called L1 at 1575.42 MHz and L2 at 1227.6 MHz. The carriers are modulated by pseudo-random (PRN) spreading codes that are unique to each satellite, and by a navigation message. All satellites transmit at the same frequencies. The separation between the satellites is possible because all the PRN codes are chosen to be orthogonal.

The L1 carrier is modulated by the so-called coarse/acquisition code ("C/A-code") and the precision code ("P-code"). The C/A-code has a chipping rate of 1.023 MHz and a length of 1 ms, thus it contains 1023 chips (the term "chip" is used for the code symbols). The same 1023 chips are repeated every millisecond. The P-code has a chipping rate of 10.23 MHz and a length of 1 week. The same pattern is thus repeated every week. The L2 carrier is modulated only by the P-code. The signal bandwidth at L1 and L2 is limited in the satellite to the main lobe of the P-code spectrum, i.e. 20.46 MHz.

In addition to the PRN code modulation, each of the carriers is also modulated by a 50-Hz navigation message, conveying all the necessary parameters to compute the satellite position and time.

Signal tracking involves synchronising local replicas of the carrier and PRN codes of the satellite to be tracked with the incoming carrier and PRN codes from that satellite. This means that the receiver must have the ability to generate the PRN codes of all the satellites. Signal tracking is achieved by continuously modifying the phase and frequency of the carrier replica and delaying or advancing the code replica in order to maintain them locked on the incoming signal. Carrier tracking is accomplished in a phase lock loop (PLL), while code tracking is performed by a delay lock loop (DLL). By definition, when synchronisation is achieved, the phase of the carrier replica is the same as the incoming carrier phase, and the delay that had to be applied to the code replica is the same as that of the incoming code.

The range measurement by a GPS receiver is based on the measurement of that delay, which is a direct measure of the signal travel time from the satellite to the receiver. By multiplying the delay by the speed of light, the receiver computes its range to the satellite.

Several error sources influence the accuracy of the satellite range measurement. One of the most cumbersome of them is the multipath error. Multipath is a special type of interference where the received signal is composed of the desired line-of-sight signal, and one or more constituents which have traversed slightly different paths due to reflections on surfaces or objects in the antenna surroundings. Multipath signals arrive at the receiver with a different delay, phase and power than the line-of-sight signal.

The ranging error due to multipath depends on the delay, phase and power of the multipath signal with respect to the line-of-sight signal, and on the type of signal processing the receiver uses. Several digital processing techniques have been devised to reduce the effect of multipath on the ranging measurements.

However, a common drawback of the available multipath mitigation methods is that they are not able to reduce multipath having a short delay. Even for the most recent multipath error mitigation techniques, multipath arriving at the receiver with a delay of less than around 20 m affect the range measurement as if no mitigation technique were used at all. This is a serious limitation of the current techniques because in real life situations, most of the multipath signals are of short delay type.

Document US-A-5390207 is related to a receiver for pseudorandom noise encoded signals. The operation of the device is based on narrowing the early-late spacing, to a fraction of a PRN code chip time, in order to mitigate multipath errors. The use of early-late correlators is a known technique for locking onto an incoming PRN code, and the early-late spacing, i.e. the time spacing between early and late versions of the local PRN code is an important parameter when it comes to multipath error mitigation.

Document US-A-5734674 is equally related to a receiver for PRN encoded signals; the receiver described in this document has the capability of dynamically adjusting the early-late spacing between correlation signals.

Document US-A-5809064 is related to improvements to the same type of receiver as described in US-A-5734674, and equally based on dynamically adjusting early-late spacing.

All techniques related to adjusting and essentially reducing the early-late spacing are linked to a modification of the DLL discriminator. A general name for these techniques is 'narrow spacing', as opposed to techniques wherein no multipath error mitigation takes place ('wide spacing' techniques). It is found that prior art 'narrow spacing' techniques reduce the maximum range error with a factor 10 compared to 'wide spacing' techniques. However, an important multipath error remains for a wide range of multipath delays.

Document US-A-5414729 is related to a receiver for PRN encoded signals, wherein a plurality of correlation signals are fed to a parameter estimator, from which the delay, amplitude and phase parameters of the direct path signal, as well as any multipath signals, may be estimated. This estimation however takes place by solving a system of equations, for example through a least-squares calculation, which requires complex and expensive hardware and software capabilities.

Document US-A-5953367 is related to a receiver for PRN encoded signals, comprising a plurality of DLL correlators provided in each of the receiver's multiple processing channels. These correlators are combined in such a way as to build a DLL discriminator which is not affected by most of the multipath errors. This improves the tracking in the presence of multipath, but requires a significant modification of the DLL architecture, in comparison to wide spacing and narrow spacing DLL's.

Document US-A-5901183 is related to a receiver for PRN encoded signals, wherein both the receiver DLL code and PLL carrier loops include a loop component that senses an error in its main loop caused by the presence of a multipath signal. A compound correlator loop is formed of a primary correlator and a secondary correlator that senses and corrects for multipath induced tracking error of the primary correlator.

Document US-A-5781152 is related to a method wherein four pseudo random code replicas are used, namely a first set of early and late codes, with a first early-late spacing 2d, and a second set with a second early-late spacing 2kd. The multipath error is estimated from an extrapolation on the basis of correlation values measured with these two sets of codes.

Document US-A-5966403 is related to a method and apparatus for minimizing the residual multipath distortion signal present in a received signal, by using a non-uniform weighting function for said estimation/minimization.

Document WO03014761 describes a method and receiver for ranging applications wherein a multipath estimation is performed on the basis of a predefined formula, said formula being based on at least two correlation values between at least four different versions of PRN code and the PRN encoded signal sent by the transmitter. The function in question is preferably a linear combination of normalized correlation values. According to WO03014761, the constant coefficients employed in said linear combination are obtained through an optimization to best approximate the error from multipath having an amplitude of one tenth of the direct signal. On the one hand, this disclosure is too limiting in choosing one single value of the ratio multipath-to-direct signal on which to base the optimization. On the other hand, such an optimization can be performed in one of several ways known to persons skilled in the art.

### Aims of the invention

The present invention aims to provide a method for designing a receiver for ranging applications according to WO03014761. The method aims to provide the best way of obtaining the coefficients of the linear combination used for estimating the multipath error in such a receiver.

### Summary of the invention

The present invention is related to a method such as described in the appended claims.

### Short description of the drawings

Fig. 1 illustrates the general concept of a receiver to which the invention is related.
Fig. 2 illustrates the optimization technique used to obtain the coefficients $\alpha_i$.
Fig. 3a and 3b illustrate the principle of the multipath estimator module.

### Detailed description of the invention

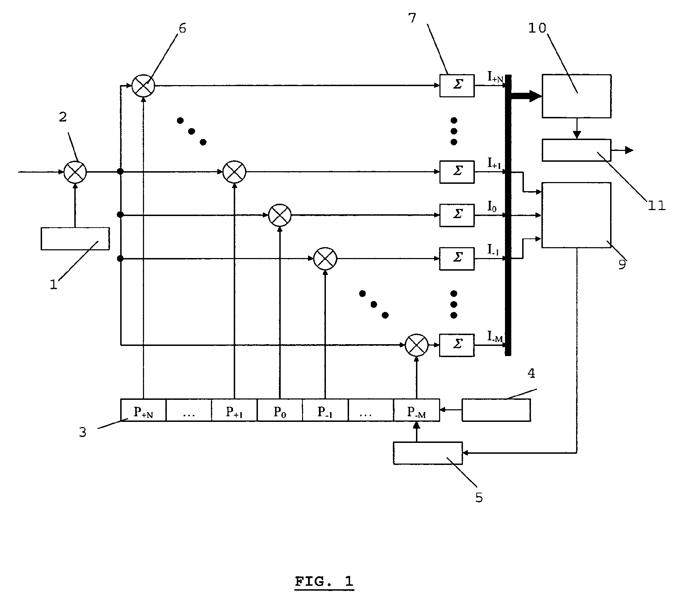

The present invention is related to a receiver for ranging applications with a structure according to figure 1, and known from WO03014761. The receiver comprises a plurality of channels, each channel being able to detect and lock onto a different PRN encoded signal (from a different satellite). Each channel comprises the elements shown in figure 1 : a carrier generator 1, carrier signal mixer 2, delay line 3 and delay line clock 4, local code generator 5, the mixers 6 and accumulators 7 for a plurality of PRN versions as well as a DLL discriminator and filter 9, designed for 'narrow spacing' type tracking ('early-late spacing' d < 1 chip). For the GPS C/A-code, the code chip duration is close to 1 $\mu$s, and the chip length close to 293 m. The delay between the early and late taps $P_{+1}$ and $P_{-1}$ is an important design parameter, which is referred to as the early-late spacing, and noted 'd'. Many receivers use a so-called "Wide spacing" of d = 1 code chip. The spacing is said to be narrow if d is lower than 1 chip.

According to the general case presented in figure 1, M+N+1 PRN code replica's are generated, namely M early versions ($P_{-M}$,...,$P_{-1}$), one punctual version ($P_0$), and N late versions ($P_{+1}$,...,$P_{+N}$). This is done by using a delay line 3 having M+N+1 taps, commanded by a delay line clock 4 and generating M+N+1 versions of the local code. The replica's are preferably equally spaced with respect to each other. The delay between any two adjacent taps in the delay line is the inverse of the frequency of the delay line clock 4, and is traditionally referred to as "d/2" in units of code chips. The delay between tap i and tap 0 is id/2 (i=-M,...,+N).

Referring again to figure 1, the local PRN code is generated in the code generator 5 at a rate which is continuously controlled by the DLL discriminator and filter 9. The code enters the delay line 3 where M+N+1 different code replicas are generated, wherein M+N+1 is at least equal to four. The following three codes are always present :

- $P_0$ , the punctual code replica, which has to be kept aligned with the incoming code.
- $P_{-1}$ , the early replica, which is advanced by a fraction of a chip with respect to $P_0$, and
- $P_{+1}$ , the late replica, delayed by a fraction of a chip with respect to Po.

The receiver further comprises a multipath estimator module 10 and low pass filter 11, wherein the multipath estimator is a means for estimating the multipath ranging error. The estimator module 10 derives M+N+1 independent estimates of the signal amplitude by scaling each of the M+N+1 correlation values by 1/(1-|i|d/2), i=(-M,..,N). When multipath is present, each of these signal amplitude estimates exhibits an error which is highly correlated with the range error, although it is different for each estimate. In WO03014761, it was shown that an appropriate linear combination of the M+N+1 signal amplitude estimates, normalized by the punctual correlation value $I_0$ closely matches the ranging error due to multipath. In other words, the range error due to multipath may be closely approximated by the following formula:

$$MP = \sum_{i=-M..N} \alpha_i \frac{1}{I_0} \frac{I_i}{1 - |i| \frac{d}{2}}$$

After the calculation according to the predefined formula, the noise on the estimation (MP) is filtered out by a low pass filter 11. The result is then subtracted from the range derived from the early-late tracking by the DLL, resulting in largely removing the multipath error from the range measurement.

The multipath estimator module 10 can be a software application, that performs the action of calculating the estimated multipath error on the basis of the correlation values ($I_{-M}$,...,$I_{+N}$) and the above formula. The estimator may equally be performed in hardware, such as a semiconductor chip. Also the filter 11 may be a software application or a hardware application.

The present invention is related to a particular method for obtaining a set of $\alpha_i$ values for the purpose of designing this type of receiver. The invention is equally related to a receiver so designed.

The method for obtaining the coefficients $\alpha_i$ according to the invention is described hereafter. As a first step, multipath range errors and M+N+1 correlation values are simulated for a predefined signal-to-multipath amplitude ratio (SMR), and for different values of multipath delays. Formulas to perform this computation are well documented, for instance in the document "Multipath Mitigation, Benefits from Using the Signal-to-Noise Ratio", J.M. Sleewaegen, Proceedings of the ION GPS-97 Meeting, pp.531-540, 1997. This simulation can be easily performed using a known calculation software such as Matlab.

The $\alpha_i$'s are found by equating the 'known' simulated multipath range errors (expressed in code chips) to a linear combination of the normalized correlation values. The coefficients $\alpha_i$ then become unknowns in a system of equations. It is also possible to set one or more $\alpha_i$'s to zero, thereby excluding the corresponding correlation(s) from the linear combination. At least two $\alpha_i$ values however must not be put to zero.

According to the preferred embodiment, the $\alpha_i$ coefficients are computed using the following method:

The multipath error profile is simulated for one particular value of the signal-to-multipath amplitude ratio (SMR), for example 10, and for the worst case conditions where multipath is in phase with the direct signal, and 180 degrees out of phase.

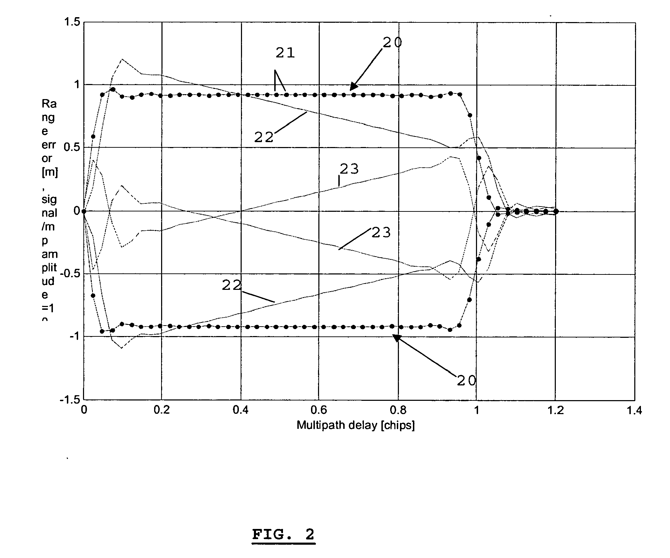

To cover the whole range of multipath delays, it is sufficient to sample the multipath profile at a given number of D points linearly equally spaced at multipath delays between for example 0 and 1.2 chips. When D=50, this yields 100 samples of the multipath profile: 50 for the in-phase case, and 50 for the out-of-phase case. This is shown in figure 2 : curve 20 is defined by the samples 21.

Let $y$ be the vector of 100 multipath error samples. For all the corresponding 100 multipath conditions, the correlation values at taps $i$ ($i$ = -M..N) are computed, and normalized by the factor $1/I_0/(1-|i|d/2)$. This yields M+N+1 vectors of 100 normalized correlation values, noted $c_j$ ($j$=1..M+N+1). Let $C = [c_1 \ c_2 \ ... \ c_{M+N+1}]$ be the matrix [100 X (M+N+1)] of correlation samples.

The $\alpha_i$ coefficients are chosen to best fit the vector of multipath estimates $MP = \sum_{j=-M..N} \alpha_j c_j$ to the vector of multipath samples y.

In other words, the coefficients $\alpha_i$ are the solution of the system $C\alpha=y$. As $\alpha$ is overdetermined by this set of equations, given that N+M+1 is normally smaller than 100, the solution is obtained by an optimization technique, preferably a least-squares optimization. By removing one or more columns from the C matrix, it is possible to exclude one or more correlations from the linear combination, or equivalently to set the corresponding $\alpha_i$ coefficient to zero.

The curve 22 in the figure 2 represents an example of the vector MP after least-squares fitting to the multipath samples of curve 20. The residual error is shown as curve 23. This is the remaining error after application of the invention. In the above description, the values of M and N and the dimension of the vector y can be chosen. The larger these values, the more accurate will be the curve fit.

The optimisation of the $\alpha_i$ coefficients has been performed for a particular value of the SMR, e.g. 10. The invention lies in the finding that computing $\alpha_i$ for other values of SMR yields very similar values. In other words, the $\alpha_i$ coefficients differ little for a wide-range of SMR. This is essential to the invention as it is impossible to predict the SMR without concrete knowledge of the reflecting obstacles.

For instance, taking the example of M=0, N=3 and d=1/15, the $\alpha$ coefficients are shown in the following table for different values of the SMR ranging from 10 to 100. It is assumed that this range of SMR is the most prevailing in a real-life multipath environment:

| SMR | $\alpha_0$ | $\alpha_1$ | $\alpha_2$ | $\alpha_3$ |
|---|---|---|---|---|
| 100.0000 | 0.0207 | -0.6541 | 0.6618 | -0.0283 |
| 77.4264 | 0.0196 | -0.6523 | 0.6606 | -0.0280 |
| 59.9484 | 0.0182 | -0.6498 | 0.6591 | -0.0275 |
| 46.4159 | 0.0164 | -0.6466 | 0.6571 | -0.0269 |
| 35.9381 | 0.0140 | -0.6423 | 0.6544 | -0.0261 |
| 27.8256 | 0.0110 | -0.6367 | 0.6507 | -0.0249 |
| 21.5443 | 0.0069 | -0.6292 | 0.6456 | -0.0233 |
| 16.6810 | 0.0017 | -0.6191 | 0.6386 | -0.0211 |
| 12.9155 | -0.0054 | -0.6042 | 0.6264 | -0.0168 |
| 10.0000 | -0.0147 | -0.5836 | 0.6089 | -0.0104 |

The table shows that the absolute variation of the $\alpha_i$'s over the selected SMR range is small.

To be specific, the following linear combination is obtained for M=0, N=3, d=1/15, and based on a SMR of 10:

$$MP = -0.015 \frac{I_0}{I_0} - 0.584 \frac{I_{+1}}{I_0} \frac{1}{1-d/2} + 0.609 \frac{I_{+2}}{I_0} \frac{1}{1-d} - 0.01 \frac{I_{+3}}{I_0} \frac{1}{1-3d/2}$$

The case of M=0 is equivalent with the situation wherein M=1 and $\alpha_{-1}$ is set to zero. In a receiver of the invention, there will always be at least one early correlator, one late correlator and one punctual correlator (and at least one additional correlator), so that M and N are at least equal to one, when indicating the number of physical early and late correlators in the receiver. The fact that one or more of the $\alpha_i$ values may be set to zero however allows in the calculation of the range error, to disregard one or more correlation values, in this case $I_{-1}$, so that M=0 for the purpose of calculating MP.

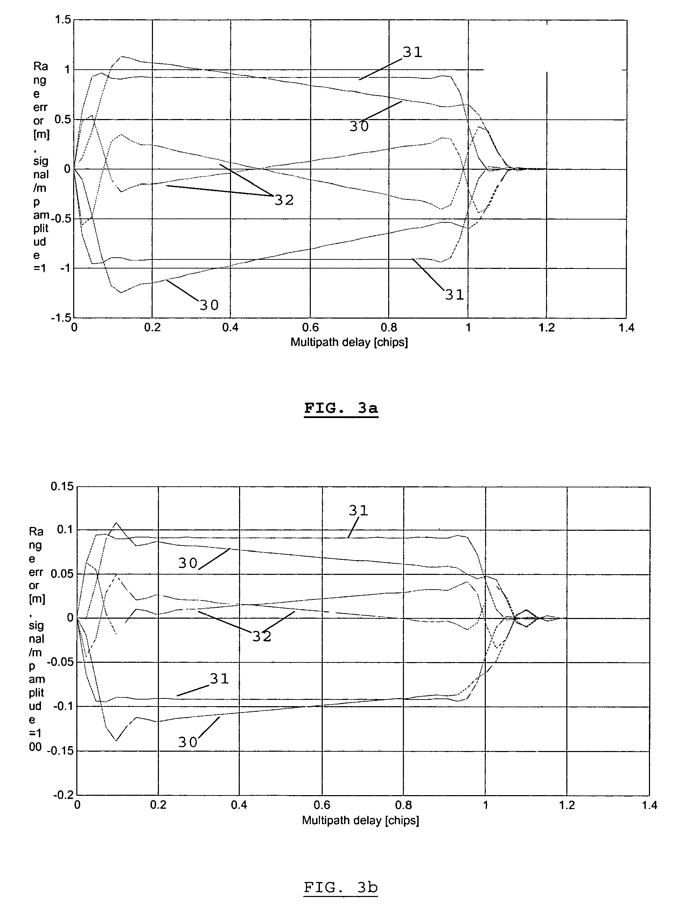

Fig. 3a and 3b compare the ranging error due to multipath and the estimation of it from the above formula, as a function of the multipath delay, for two different signal to multipath amplitude ratios : 10 and 100 respectively. In figures 3a and 3b, the upper curve corresponds to a multipath component arriving in-phase with the line-of-sight component, the lower curve correspond to a 180° phase shift. It is apparent that the multipath estimate (curves 30) given by the linear combination given above for M=0 and N=3, closely matches the range error (curves 31), even for very short multipath delays. The curves 32 show the residual range error. The $\alpha_i$ coefficients in the above formula have been optimised to best approximate the error from multipath having an SMR of 10 (case of Fig. 3a,). However, the same set of coefficients provides a pretty good approximation of the error for other multipath amplitudes (see Fig. 3b, signal-to-multipath amplitude ratio = 100).

We can therefore summarize the inventive effect of the invention as follows :

- the calculation of the $\alpha_i$ coefficients is insensitive to the SMR value chosen for this calculation. In other words, whether the calculation is based on a SMR of 10 or 100, the $\alpha_i$ values do not change much.
- With a given set of a $\alpha_i$ values, calculated on the basis of a particular SMR (e.g. 10), it is possible to estimate multipath errors of a wide range of multipath signals, i.e. signals having a wide range of the SMR.

This allows to conclude that the $\alpha_i$ values can be calculated once during the design of the receiver, based on one SMR value, within the realistic range. An acceptable estimation of range errors due to multipath of different SMR, will be possible using this ONE fixed formula.

The invention is equally related to a receiver, comprising a multipath estimator which calculates the range error based on the linear combination with fixed $\alpha_i$ values, calculated as disclosed above.

## Claims

1. A method for designing a receiver, said receiver comprising :

   - a delay line, comprising M+N+1 taps, M+N+1 being at least four, for obtaining M+N+1 PRN codes, one of which is a punctual code $P_0$, one an early code $P_{-1}$, and one a late code $P_{+1}$, with an early-late spacing d between the early and late code,
   - M+N+1 mixers and accumulators to calculate M+N+1 correlation values ($I_{-M},..., I_{+N}$),
   - a multipath estimator module to calculate a multipath error estimate (MP), according to the formula :

$$MP = \sum_{i=-M..N} \alpha_i \frac{1}{I_0} \frac{I_i}{1-|i|\frac{d}{2}}$$ wherein MP represents the multipath error, d represents the early-late spac-

   ing, $I_0$ represents the correlation value of said punctual replica , $I_{-M},...,I_{+N}$ represent the correlation values, $\alpha_i$ represent M+N+1 fixed values,

   said method comprising the steps of :

   - simulating, for a fixed signal-to-multipath amplitude ratio and for different multipath delays : the multipath range error and M+N+1 correlation values,
   - using said simulated range errors and correlation values to obtain a system of equations, each equation equating the simulated multipath range error to a linear combination of the M+N+1 correlation values,
   - obtaining said $\alpha_i$ values by solving said system of equations.

2. The method according to claim 1, wherein all except two of said $\alpha_i$ values may be set to zero.

3. The method according to claim 1 or 2 comprising the steps of :

   - for a given signal-to-multipath SMR and for a given number D of multipath delays, calculating the range error, for multipath in phase with a simulated line-of-sight signal and for multipath 180° out of phase with said simulated line-of-sight signal, thereby obtaining a vector y comprising 2D range error values,
   - calculating, for each of the 2D range errors, the M+N+1 correlation values, and normalizing said correlation values by the correlation value $I_0$ of said punctual replica $P_0$, to obtain a (2D X (M+N+1)) matrix C,
- calculating the $\alpha_i$ values by solving the system of equations : $y=C.\alpha.$, wherein $\alpha$ is a vector comprising the M+N+1 $\alpha_i$ values.

4. The method according to claim 3, wherein the vector $\alpha$ is overdetermined by said system of equations and wherein said vector $\alpha$ is obtained by an optimization technique.

**FIG. 1**

**FIG. 2**

9

**FIG. 3a**

**FIG. 3b**

**European Patent Office**

# EUROPEAN SEARCH REPORT

Application Number

EP 06 44 7031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | WO 03/014761 A (SEPTENTRIO N.V; SLEEWAEGEN, JEAN-MARIE) 20 February 2003 (2003-02-20) | 1,2 | INV. G01S1/00 H04B1/707 |
| A | * abstract; figures 2,4,6 * <br> * paragraphs [0022] - [0028] * <br> * paragraphs [0052] - [0055] * <br> * paragraph [0058] * <br> ----- | 3,4 | |
| D,A | US 5 414 729 A (FENTON ET AL) 9 May 1995 (1995-05-09) <br> * abstract; figures 2,3 * <br> * column 3, line 22 - line 62 * <br> * column 11, line 1 - column 13, line 49 * <br> ----- | 1-4 | |
| | | | **TECHNICAL FIELDS SEARCHED (IPC)** <br> G01S <br> H04B |

The present search report has been drawn up for all claims

| Place of search | Date of completion of the search | Examiner |
|---|---|---|
| Munich | 3 August 2006 | Galli, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO. EP 06 44 7031

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2006

| Patent document cited in search report | | Publication date | Patent family member(s) | | Publication date |
|---|---|---|---|---|---|
| WO 03014761 | A | 20-02-2003 | EP | 1288672 A1 | 05-03-2003 |
| | | | US | 2006133461 A1 | 22-06-2006 |
| US 5414729 | A | 09-05-1995 | AT | 187254 T | 15-12-1999 |
| | | | AU | 660757 B2 | 06-07-1995 |
| | | | AU | 3197193 A | 29-07-1993 |
| | | | CA | 2087909 A1 | 25-07-1993 |
| | | | CN | 1080059 A | 29-12-1993 |
| | | | DE | 69327119 D1 | 05-01-2000 |
| | | | DE | 69327119 T2 | 21-06-2000 |
| | | | DK | 552975 T3 | 27-03-2000 |
| | | | EP | 0552975 A2 | 28-07-1993 |
| | | | ES | 2141129 T3 | 16-03-2000 |
| | | | SG | 43672 A1 | 14-11-1997 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5390207 A
- US 5734674 A
- US 5809064 A
- US 5414729 A
- US 5953367 A
- US 5901183 A
- US 5781152 A
- US 5966403 A
- WO 03014761 A

**Non-patent literature cited in the description**

- **J.M. SLEEWAEGEN.** Multipath Mitigation, Benefits from Using the Signal-to-Noise Ratio. *Proceedings of the ION GPS-97 Meeting,* 1997, 531-540